# EUROPÄISCHE PATENTANMELDUNG

(11) **EP 1 283 463 A2**
(43) Veröffentlichungstag der Anmeldung: **12.02.2003**
(21) Anmeldenummer: 02017237.5
(22) Anmeldetag: 31.07.2002
(51) Int. Cl.: G06F 7/50

(54) **Carry-Ripple-Addierer**

(30) Priorität: 09.08.2001 DE 10139099
(71) Anmelder: Infineon Technologies AG, 81669 München (DE)
(72) Erfinder: Hatsch, Joel, 82008 Unterhaching (DE); Kamp, Winfried, 81739 München (DE); Köppe, Siegmar, 30880 Laatzen (DE); Künemund, Ronald, 83623 Dietramszell (DE); Lackerschmid, Eva, 81739 München (DE); Söldner, Heinz, 83052 Bruckmühl-Heufeldmühle (DE)
(74) Vertreter: Lange, Thomas, Dr.

(57) **Zusammenfassung**

Ein Carry-Ripple Addierer umfasst 4 oder 3 erste Eingänge (10, 11, 12; 13) zur Entgegennahme von 4 oder 3 zu summierenden Eingabe-Bits gleicher Wertigkeit w und 2 zweite Eingänge (CI0, CI1) zur Entgegennahme von zwei Übertrags-Bits der Wertigkeit w. Ferner umfasst der Addierer einen Ausgang (S) für ein Summen-Bit der Wertigkeit w und zwei Ausgänge (C0, C1) für zwei Übertrags-Bits der Wertigkeiten 2w und 4w.

## Beschreibung

Die Erfindung betrifft Carry-Ripple Addierer sowie übertragsbeschleunigte Addierer zum Summieren einer Mehrzahl von Bit-Sätzen, wobei die in einem Bit-Satz enthaltenen Bits dieselbe Wertigkeit und Bits unterschiedlicher Bit-Sätze unterschiedliche Wertigkeiten aufweisen.

Carry-Ripple (CR) Addierer sind in der Technik auch als Addierer mit paralleler Übertragslogik bekannt. Vergleichbar einem Carry-Save (CS) Addierer weisen sie mehrere Eingänge gleicher Wertigkeit auf und summieren im Betrieb die an diesen Eingängen anliegenden Bits. Die Summe der Bits wird an Ausgängen unterschiedlicher Wertigkeit z.B. in dualkodierter Zahlendarstellung ausgegeben.

Ein wesentliches Charakteristikum von CR Addierern besteht darin, dass sie Eingänge mit unterschiedlichem Zeitverhalten aufweisen. Im Gegensatz zu den Eingängen von CS Addierern sind die Eingänge von CR Addierern deshalb nicht gleichberechtigt im Sinne von beliebig vertauschbar. Dies wird im folgenden am Beispiel des bekannten 3-zu-2 CR Addierers mit 3 Eingängen und 2 Ausgängen (im folgenden zur Unterscheidung der nicht gleichberechtigten Eingänge als "2und1-zu-2 CR Addierer" bezeichnet) erläutert.

Der bekannte 2und1-zu-2 CR Addierer umfasst zwei erste Eingänge zur Entgegennahme von jeweils einem Eingabe-Bit und einen dritten Eingang, an welchem ein Übertrags-Bit anliegt, welches von einem 2und1-zu-2 CR Addierer ausgegeben wird, welcher Bits der nächst kleineren Wertigkeit addiert. Der 2und1-zu-2 CR Addierer weist zwei Ausgänge auf, wobei einer der Ausgänge das Summen-Bit der Wertigkeit der Eingabe-Bits dieses Addierers ausgibt, während es sich bei dem anderen Ausgang um einen Übertrags-Ausgang der zweifachen Wertigkeit handelt, an welchem das Übertrags-Bit für den 2und1-zu-2 CR Addierer zum Summieren von Bits der nächst höheren Wertigkeit ausgegeben wird.

Somit ergibt sich bei CR Addierern stets die Notwendigkeit, dass bei der Berechnung des Summen-Bits ein Übertrags-Bit zu berücksichtigen ist, welches aber zuvor in dem CR Addierer der nächst niedrigeren Wertigkeit erst noch berechnet werden muss. Um zu vermeiden, dass dabei ein zeitintensiver Berechnungsvorgang entsteht, muss bei CR Addierern durch einen geeigneten internen Schaltungs- bzw. Gatteraufbau dafür gesorgt werden, dass das Übertrags-Bit mit möglichst wenigen Gattern im kritischen Pfad zwischen dem Übertrags-Eingang ("carry in") und dem Übertrags-Ausgang ("carry out") aus den Eingangs-Bits berechnet werden kann. Auf diese Weise wird der Gesamt-Übertragspfad ("carry-path") optimiert, da er aus möglichst wenigen Gattern besteht.

Der 2und1-zu-2 CR Addierer kann lediglich zwei Bits addieren. Für die Addition von drei oder mehr Dualzahlen muss aber eine entsprechend höhere Anzahl von Bits pro Stelle addiert werden. Üblicherweise wird zur Addition von mehr als zwei Bits gleicher Wertigkeit ein Wallace-Tree-(WT-)Addierer eingesetzt. Ein WT-Addierer ist ein mehrstufiger Addierer, welcher in jeder Stufe die Anzahl der zu addierenden Bits verkleinert. Die einzelnen Stufen eines WT-Addierers sind aus parallel zueinander angeordneten 3-zu-2 CS Volladdierern aufgebaut. Mit jeder Stufe verringert sich die Anzahl der benötigten 3-zu-2 CS Volladdierer. Sobald die Anzahl der zu summierenden Bits auf den Wert 2 reduziert ist, wird als letzte und abschließende Stufe der bereits erwähnte 2und1-zu-2 CR Addierer eingesetzt.

Der Erfindung liegt die Aufgabe zugrunde, einen CR Addierer zu schaffen, der mit Vorteil in einer Vielzahl von Addiererkonfigurationen einsetzbar ist. Insbesondere soll er eine hohe Addiergeschwindigkeit und eine Reduzierung der Stufenanzahl bekannter Addiererstrukturen ermöglichen.

Die der Erfindung zugrunde liegende Aufgabenstellung wird durch die Merkmale der Ansprüche 1 und 2 gelöst.

Sowohl der erfindungsgemäße 4und2-zu-3 CR als auch der erfindungsgemäße 3und2-zu-3 CR Addierer vermögen in einer Addiererstufe eine größere Anzahl von Bits (nämlich 4 bzw. 3) als der bekannte 2und1-zu-2 CR Addierer zu addieren. Sofern mehr als zwei Bits zu addieren sind, können dadurch - wie im folgenden noch näher erläutert - Addierer mit verringertem Schaltungsaufwand realisiert werden. Durch die Ausgabe von zwei Überträgen unterschiedlicher Wertigkeit wird in beiden Fällen die Darstellungsmöglichkeit von drei Ausgangssignalen für die Addition der insgesamt sechs (4und2-zu-3 CR Addierer) bzw. fünf (3und2-zu-3 CR Addierer) Bits an den Eingängen des jeweiligen CR Addierers genutzt.

Besonders bevorzugte Ausführungsformen der beiden erfindungsgemäßen CR Addierer kennzeichnen sich dadurch, dass eine maximale Anzahl von 4 Gattern zwischen einem beliebigen ersten Eingang und einem beliebigen der Ausgänge für die Übertrags-Bits vorhanden ist.

Ferner ist bevorzugt, dass bei den erfindungsgemäßen CR Addierern die maximale Anzahl von 2 Gattern zwischen einem beliebigen zweiten Eingang (Übertrags-Eingang) und einem beliebigen der Ausgänge für die Übertrags-Bits vorhanden ist. Dadurch wird jeweils eine Optimierung des kritischen Pfads der erfindungsgemäßen CR-Addierer erreicht, d.h. deren Rechengeschwindigkeit beschleunigt.

Durch die gleichzeitige Erzeugung von zwei Überträgen unterschiedlicher Wertigkeit ist der Schaltungsaufwand geringer als bei der mehrstufigen Lösung mit herkömmlichen kaskadierten 3-zu-2 CS Volladdierern und einem 2und1-zu-2 CR Addierer.

Die erfindungsgemäßen CR Addierer können mit Vorteil in größeren Addiererstrukturen eingesetzt werden. In zahlreichen Anwendungsfällen, z.B. bei Multiplizierern, werden Addierer benötigt, die eine Mehrzahl von Bit-Sätzen verarbeiten, wobei die in einem Bit-Satz enthaltenen Bits dieselbe Wertigkeit und Bits unterschiedlicher Sätze unterschiedliche Wertigkeiten aufweisen. Ein erfindungsgemäßer übertragsbeschleunigter Addierer dieser Art kennzeichnet sich dadurch, dass zumindest einer der Bit-Satz-Addierer einen ausgangsseitig angeordneten erfindungsgemäßen CR Addierer aufweist.

Sofern sämtliche Bit-Sätze maximal vier (drei) Bits enthalten, d.h. mit anderen Worten, maximal vier (drei) Dualzahlen durch den übertragsbeschleunigten Addierer zu addieren sind, kennzeichnet sich eine vorteilhafte Ausführungsform des übertragsbeschleunigten Addierers dadurch, dass sämtliche Bit-Satz-Addierer jeweils einstufig in Form der erfindungsgemäßen 4und2-zu-3 (bzw. 3und2-zu-3) CR Addierer realisiert sind. In diesem Fall wird der Ausgang für das niederwertigere der zwei Übertrags-Bits einem zweiten Eingang des jeweiligen CR Addierers für die nächst höhere Wertigkeit zugeführt, und der Ausgang für das höherwertigere der zwei Übertrags-Bits wird einem zweiten Eingang des jeweiligen CR Addierers für die übernächst höhere Wertigkeit zugeführt.

Ein bevorzugter übertragsbeschleunigter Addierer, der auch für die Addition von mehr als vier (drei) Dualzahlen geeignet ist, kennzeichnet sich dadurch, dass zumindest einem Bit-Satz ein mehrstufiger Bit-Satz-Addierer zugeordnet ist, und dass die ausgangsseitige Stufe dieses Bit-Satz-Addierers ein erfindungsgemäßer 4und2-zu-3 (bzw. 3und2-zu-3) CR Addierer ist. In diesem Fall müssen die eingangsseitigen CS Addiererstufen eine Verringerung der Anzahl der zu addierenden Bits lediglich auf einen Wert von vier (drei) leisten, wodurch verglichen zum Stand der Technik, bei dem ausgangsseitig ein 2und1-zu-2 CR Addierer eingesetzt wird, eine geringere Anzahl von CS Addiererstufen benötigt wird.

Weitere vorteilhafte Ausgestaltungen der Erfindung sind in den Unteransprüchen angegeben.

Die Erfindung wird nachfolgend anhand von Ausführungsbeispielen unter Bezugnahme auf die Zeichnung beschrieben; in dieser zeigt:
- Fig. 1: einen Addiererbaum gemäß dem Stand der Technik, welcher aus 3-zu-2 CS Addierern aufgebaut ist und welcher ausgangsseitig mit einem 2und1-zu-2 CR Addierer versehen ist;
- Fig. 2: ein Stufendiagramm zur Erläuterung des Stufenaufbaus eines bekannten Addiererbaums zum Aufaddieren von 49 Bits derselben Wertigkeit;
- Fig. 3: eine schematische Darstellung eines erfindungsgemäßen 4und2-zu-3 CR Addierers;
- Fig. 4: eine Wahrheitstabelle für einen 4und2-zu-3 CR Addierer;
- Fig. 5: eine Wahrheitstabelle für einen 3und2-zu-3 CR Addierer;
- Fig. 6: ein Blockschaltbild eines ersten Schaltungsabschnitts eines erfindungsgemäßen 4und2-zu-3 CR Addierers;
- Fig. 7: ein Blockschaltbild eines sich an den in Fig. 6 dargestellten ersten Abschnitt anschließenden zweiten Schaltungsabschnitts des erfindungsgemäßen 4und2-zu-3 CR Addierers;
- Fig. 8: ein Blockschaltbild eines ersten Schaltungsabschnitts eines erfindungsgemäßen 3und2-zu-3 CR Addierers;
- Fig. 9: ein Blockschaltbild eines sich an den in Fig. 8 dargestellten ersten Abschnitt anschließenden zweiten Schaltungsabschnitts des erfindungsgemäßen 3und2-zu-3 CR Addierers; und
- Fig. 10: ein Blockschaltbild zur Erläuterung eines erfindungsgemäßen übertragsbeschleunigten Addierers für 4 Binärzahlen.

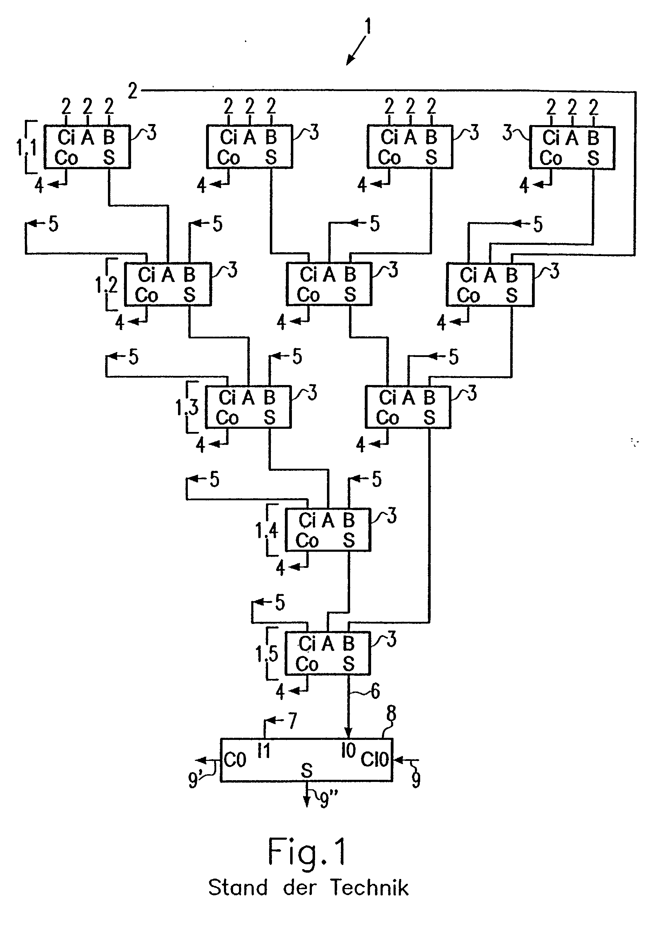

Fig. 1 zeigt einen Addiererbaum bestehend aus einem fünfstufigen WT-Addierer 1 mit einem dem WT-Addierer 1 nachgeschalteten 2und1-zu-2 CR Addierer zur Addition von 13 Eingabe-Bits 2 gleicher Wertigkeit nach dem Stand der Technik.

Der WT-Addierer 1 umfasst insgesamt 11 3-zu-2 CS Volladdierer 3. Jeder 3-zu-2 CS Volladdierer 3 weist drei Eingänge A, B, Ci und zwei Ausgänge S, Co auf. Die Eingänge A und B sind zur Entgegennahme von zwei zu addierenden Bits vorgesehen, der Eingang Ci (Carry in) ist zum Empfang eines Übertrags-Bits vorgesehen. Die drei Eingänge A, B, Ci sind äquivalent.

Der Ausgang S repräsentiert den Summen-Ausgang des 3-zu-2 CS Volladdieres 3. Der Ausgang S nimmt den Wert Null an, wenn an sämtlichen Eingängen A, B, Ci ein Bit des Wertes Null anliegt oder wenn an genau zwei der Eingänge A, B, Ci ein Bit des Wertes 1 anliegt. Andernfalls ist S = 1. Der Ausgang Co für den Übertrag (Carry out) nimmt nur dann den Wert 1 an, wenn an mindestens zwei der Eingänge ein Bit des Wertes 1 anliegt. Im Gegensatz zu den Eingängen A, B, Ci sind die Ausgänge S und Co nicht äquivalent.

Die fünf Stufen 1.1, 1.2, 1.3, 1.4, 1.5 des WT-Addierers 1 umfassen 4, 3, 2, 1 bzw. 1 3-zu-2 CS Volladdierer 3. Die 13 Eingänge des WT-Addierers sind durch die 12 Eingänge 2 der ersten Stufe 1.1 und einen Eingang 2 der zweiten Stufe 1.2 realisiert.

Während die Ausgänge S der ersten Stufe 1.1 jeweils Eingängen der CS Volladdierer 3 der zweiten Stufe 1.2 zugeführt werden, werden die 4 Ausgänge Co, welche ein Übertrags-Bit 4 bereitstellen, einer zweiten Stufe eines (nicht dargestellten) WT-Addierers zur Addition eines Bit-Satzes mit einer nächst höheren Wertigkeit zugeleitet. In analoger Weise empfangen die 3-zu-2 CS Volladdierer 3 der zweiten Stufe 1.2 jeweils ein oder zwei Übertrags-Bits 5, welche von einer ersten Stufe eines (nicht dargestellten) WT-Addierers für einen Bit-Satz mit nächst niedrigerer Wertigkeit ausgegeben werden.

Dieses Prinzip setzt sich über die zweite 1.2 und dritte 1.3, dritte 1.3 und vierte 1.4 und vierte 1.4 und fünfte 1.5 Stufe des WT-Addierers 1 fort. Der Ausgang des WT-Addierers wird durch ein Summen-Bit 6 und ein partielles Übertrags-Bit 7, welches von der fünften Stufe des WT-Addierers 1 nächst niedrigerer Wertigkeit stammt, repräsentiert. Diese beiden Bits bilden die Eingänge I0, I1 eines dem WT-Addierer 1 nachgeschalteten 2und1-zu-2 CR Addierers 8, der an seinem Summenausgang S das Summenbit 9" für den betrachteten Bit-Satz liefert. Der 2und1-zu-2 CR Addierer 8 empfängt zu diesem Zweck an einem Eingang CI0 ein Übertrags-Bit 9, das von einem 2und1-zu-2 CR Addierer für die Berechnung des Summen-Bits der nächst niedrigeren Wertigkeit ausgegeben wird, und gibt an seinem Übertrags-Ausgang C1 entsprechend ein Übertrags-Bit 9' aus.

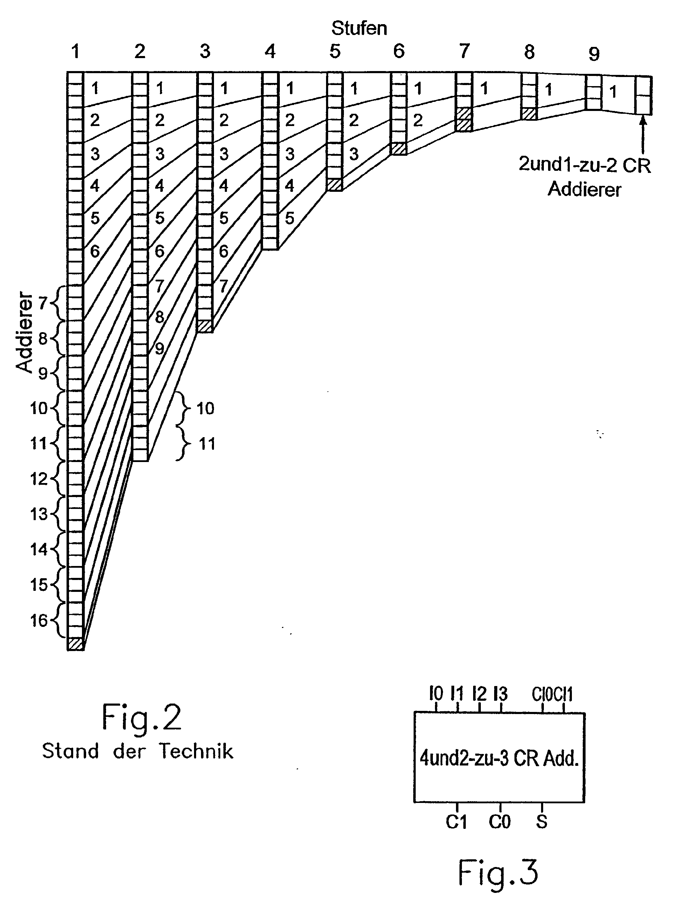

Wenn mehr als 13 Dualzahlen zu addieren sind, werden Bit-Satz-Addierer mit einer entsprechend größeren Anzahl von Eingängen benötigt. Fig. 2 veranschaulicht die Stufenstruktur eines solchen WT-Addierers mit einem 2und1-zu-2 CR Addierer als Endstufe zur Addition von 49 Bits gleicher Wertigkeit. In der Darstellung sind die Eingabe-Bits einer jeden Stufe als Kästchen-Säule dargestellt. Jedes Kästchen entspricht einem Eingabe-Bit. Schraffiert dargestellte Eingabe-Bits werden nicht in der entsprechenden Stufe verarbeitet sondern direkt der nächsten Stufe zugeleitet. Da ein WT-Addierer in jeder Stufe Übertrags-Bits von einem benachbarten (nicht dargestellten) WT-Addierer nächst kleinerer Wertigkeit entgegennimmt und gleichermaßen Übertrags-Bits für einen (nicht dargestellten) WT-Addierer nächst höherer Wertigkeit ausgibt-siehe Fig. 1 - ist Fig. 2 nicht als Schaltbild, sondern allein als Stufenbilanz-Darstellung zu verstehen.

Fig. 2 macht deutlich, dass insgesamt neun WT-Addierer-Stufen und eine CR Endstufe zur Addition der 49 Bits benötigt werden. Die erste Stufe weist 16 3-zu-2 CS Volladdierer auf und die nachfolgenden Stufen enthalten 11, 7, 5, 3, 2, 1, 1 3-zu-2 CS Volladdierer. Die letzte Stufe ist ein 3-zu-2 Volladdierer, der als 2und1-zu-2 Bit CR Addierer ausgeführt ist, das heisst in nicht dargestellter Weise ein Übertrags-Bit von einem 2und1-zu-2 CR Addierer des (nicht dargestellten) benachbarten Bit-Satz-Addierers mit der nächst niedrigeren Wertigkeit empfängt.

Fig. 3 zeigt eine schematische Darstellung eines erfindungsgemäßen 4und2-zu-3 CR Addierers. Der Addierer weist die Eingänge I0, I1, I2, I3, CI0, CI1 und die Ausgänge S, C0, C1 auf. Die Eingänge I0 bis I3 stellen Eingänge für vier Eingabe-Bits gleicher Wertigkeit dar, während die Eingänge CI0, CI1 für zwei Übertrags-Bits ebenfalls derselben Wertigkeit vorgesehen sind. Sämtliche Eingänge sind in bezug auf ihre logische Funktionalität äquivalent, d.h. es werden im Ergebnis sechs Bits addiert.

Unterschiede ergeben sich im Zeitverhalten der Eingänge. Die Eingänge I0 bis I3 weisen ein identisches Zeitverhalten auf, d.h. sind untereinander vertauschbar. Die Eingänge CI0, CI1 können ebenfalls untereinander vertauschbar sein, weisen im Vergleich zu den erstgenannten "langsamen" Eingängen I0 bis I3 jedoch eine optimierte (kürzere) Durchlaufzeit auf.

Die Addition von sechs Bits umfasst einen Wertebereich zwischen Null und sechs. Die drei Ausgänge des 4und2-zu-3 CR Addierers repräsentieren die Summe der an den Eingängen anliegenden Bits in dualkodierter Form. Der Ausgang S für das Summen-Bit weist die gleiche Wertigkeit wie der Satz von Eingabe-Bits I0 bis I3 sowie CI0, CI1 auf. Bei dem Ausgang C1 handelt es sich um einen Übertrags-Ausgang, welcher eine um den Faktor 2 höhere Wertigkeit als der Ausgang S für das Summen-Bit aufweist. Der Ausgang C1 ist ebenfalls ein Ausgang für ein Übertrags-Bit, jedoch mit einer nochmals um den Faktor 2 erhöhten Wertigkeit gegenüber dem Ausgang C1. Mit anderen Worten weisen die Ausgänge S, C0 und C1 die Wertigkeiten 2⁰, 2¹ und 2² bezogen auf die Wertigkeit des Bit-Satzes am Eingang des 4und2-zu-3 CR Addierers auf.

Bezüglich der Darstellung in Fig. 3 unterscheidet sich der erfindungsgemäße 3und2-zu-3 CR Addierer von dem in Fig. 3 gezeigten 4und2-zu-3 CR Addierer lediglich dadurch, dass der Eingang I3 entfällt.

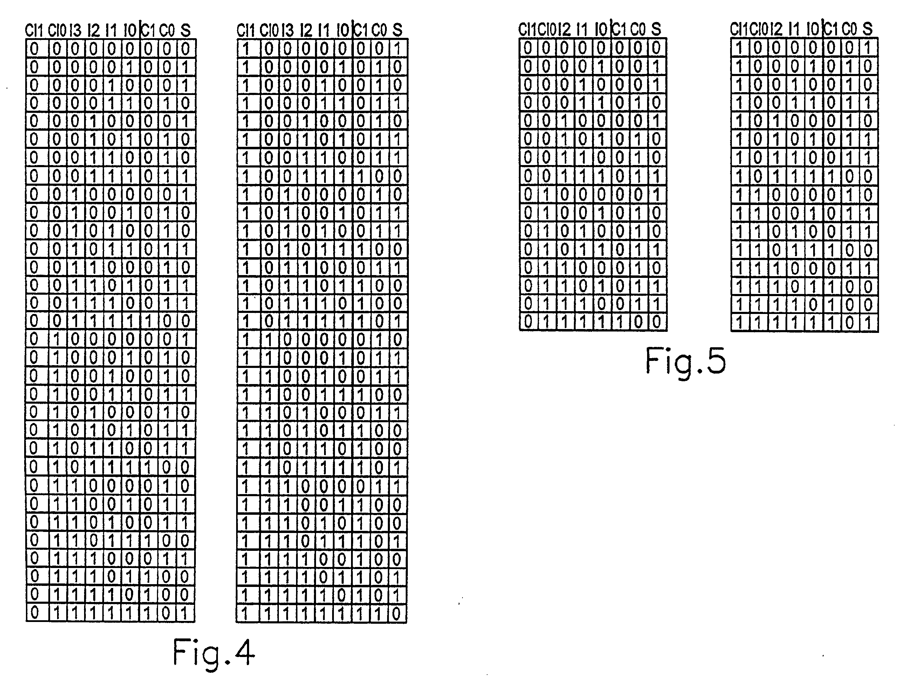

Fig. 4 gibt die Wahrheitstabelle des erfindungsgemäßen 4und2-zu-3 CR Addierers wieder. Die Wahrheitstabelle des erfindungsgemäßen 3und2-zu-3 CR Addierers ist in Fig. 5 gezeigt.

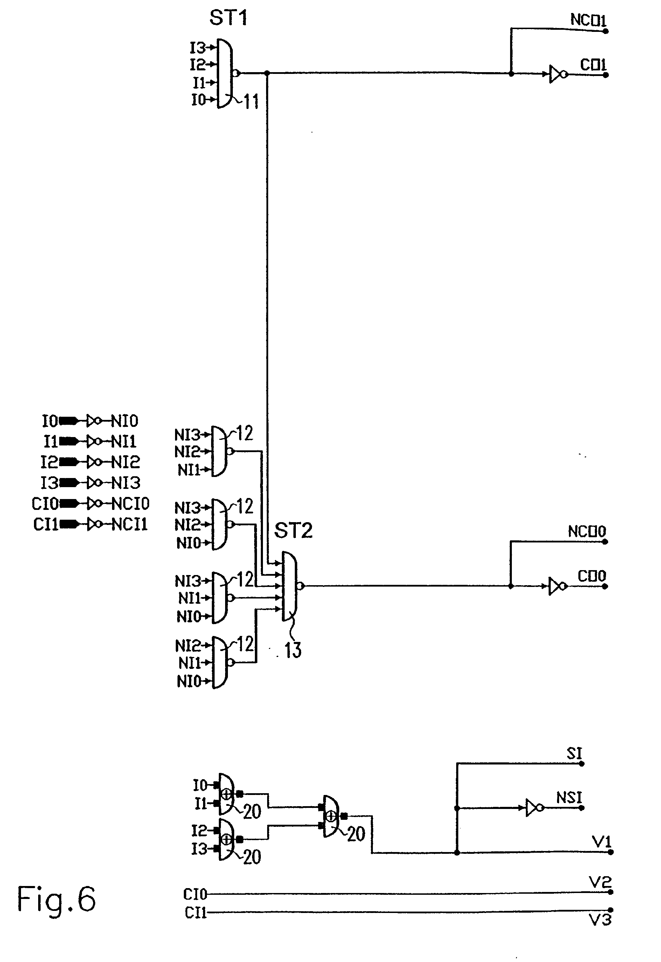

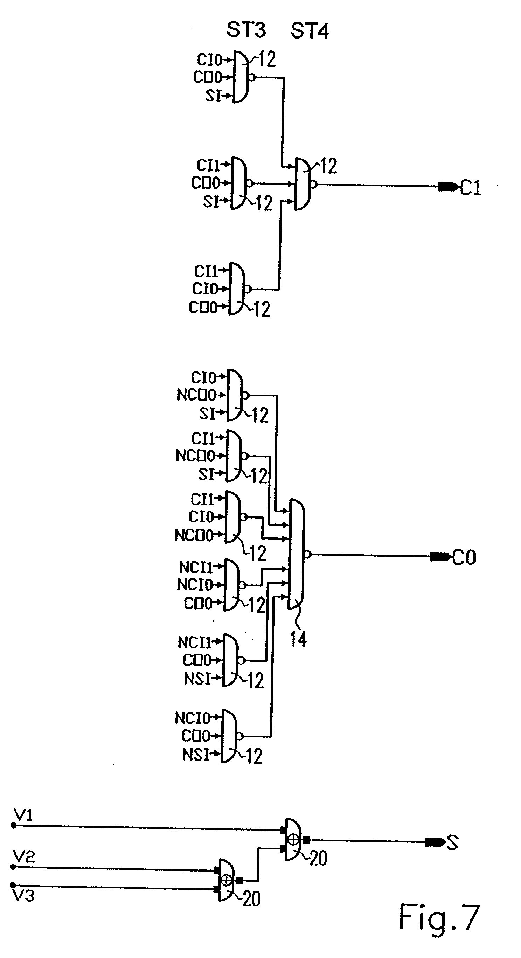

Die Fig. 6 und 7 verdeutlichen in Zusammenschau die Gatterstruktur eines Ausführungsbeispiels eines erfindungsgemäßen 4und2-zu-3 CR Addierers. Dabei bezeichnen NI0 bis NI3, NCI0, NCI1 die invertierten Eingänge I0 bis I3, CI0, CI1. Dies ist im linken Teil der Fig. 6 symbolisch dargestellt. Die Verschaltung der Gatter ist den weiteren in Fig. 6 dargestellten Bezugszeichen zu entnehmen. V1, V2 und V3 bezeichnen dabei Verbindungsstellen zwischen den in den Fig. 6 und 7 gezeigten Schaltungsabschnitten.

Eine Zusammenschau der Fig. 6 und 7 macht deutlich, dass die Übertrags-Ausgänge C0 und C1 von der Belegung der Eingänge I0 bis I3 und der Übertrags-Eingänge CI0, CI1 abhängig sind. Zur Steuerung der Übertrags-Ausgänge C0, C1 wird ein 4-stufiger Gatteraufbau eingesetzt. Eine erste Stufe ST1 besteht diesbezüglich aus einem NAND-Gattern 11 mit vier Eingängen und vier NAND-Gattern 12 mit jeweils 3 Eingängen. Wie den Bezugszeichen zu entnehmen ist, wird das NAND-Gatter 11 an allen vier Eingängen nicht-invertiert und werden die NAND-Gatter 12 jeweils an sämtlichen drei Eingängen invertiert angesteuert.

Die Ausgänge der NAND-Gatter 11 und 12 der ersten Stufe ST1 werden zusammengefasst und einem NAND-Gattern 13 mit fünf Eingängen zugeleitet. Das NAND-Gatter 13 bildet die zweite Stufe ST2 des 4und2-zu-3 CR Addierers bezüglich der Übertrags-Ausgänge C0, C1.

Die dritte Stufe ST3 ist bezüglich des ersten Übertrags-Ausgangs C0 aus sechs NAND-Gattern 12 mit jeweils drei Eingängen aufgebaut. Bezüglich dem zweiten Übertrags-Ausgang C1 weist die dritte Stufe ST3 drei NAND-Gatter 12 mit jeweils drei Eingängen auf.

Die vierte Stufe ST4 weist hinsichtlich des niederwertigen Übertrags-Ausgangs C0 ein NAND-Gatter 14 mit sechs Eingängen und hinsichtlich des höherwertigen Übertrags-Ausgangs C1 ein NAND-Gatter 12 mit drei Eingängen auf.

Der Gatteraufbau zur Ansteuerung des Summen-Ausgangs S ist ebenfalls 4-stufig. Die erste Stufe besteht aus zwei parallel zueinander angeordneten XOR-Gattern 20, welche die vier Eingänge I0, I1, I2 und I3 entgegennehmen. Die zweite bis vierte Stufe besteht jeweils aus einem einzelnen XOR-Gatter 20.

Das Schaltbild macht deutlich, dass die beiden Übertrags-Eingänge CI0 und CI1 erst der dritten Stufe ST3 des erläuterten Gatteraufbaus zugeleitet werden. Dies gilt sowohl für die Übertrags-Ausgänge C0, C1 als auch für den Summen-Ausgang S. Demzufolge werden die Bits für die Übertragseingänge CI0, CI1 mit einer geringeren Zeitverzögerung als die Eingangs-Bits I0 bis I3 in die Rechnung eingehen - sie brauchen also erst zu einem späteren Zeitpunkt vorliegen. Nach dem Empfang der Bits an den Übertragseingängen CI0, CI1 werden lediglich zwei Gatterlaufzeiten benötigt, um an den Übertrags-Ausgängen C0, C1 die Übertrags-Bits bereitzustellen. (Inverter sind in der Zeichnung durch Dreieck-Symbole dargestellt; sie werden bei der Zählung der Gatter und Gatterlaufzeiten aus Konsistenzgründen nicht berücksichtigt, da sie gegebenenfalls auch in Logik-Gattern integriert ausgeführt sein können.)

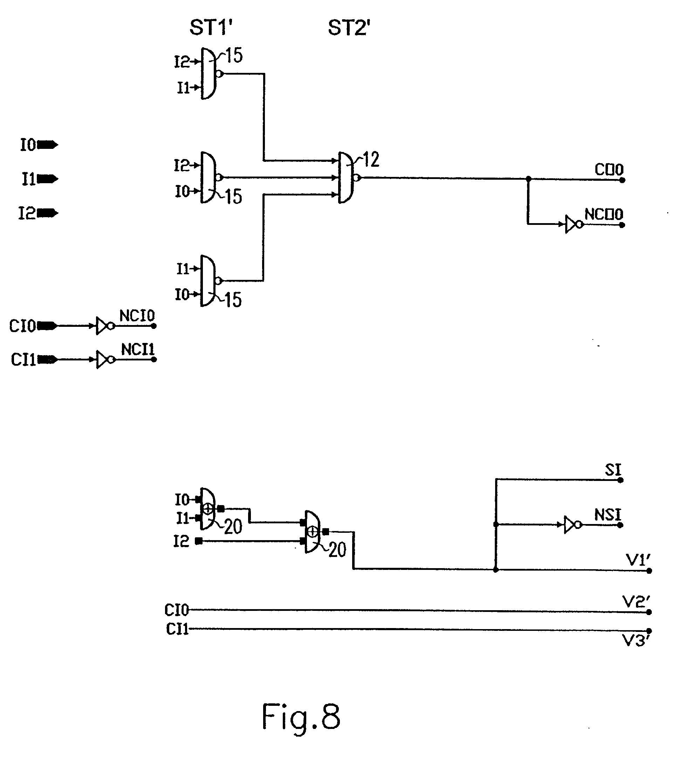

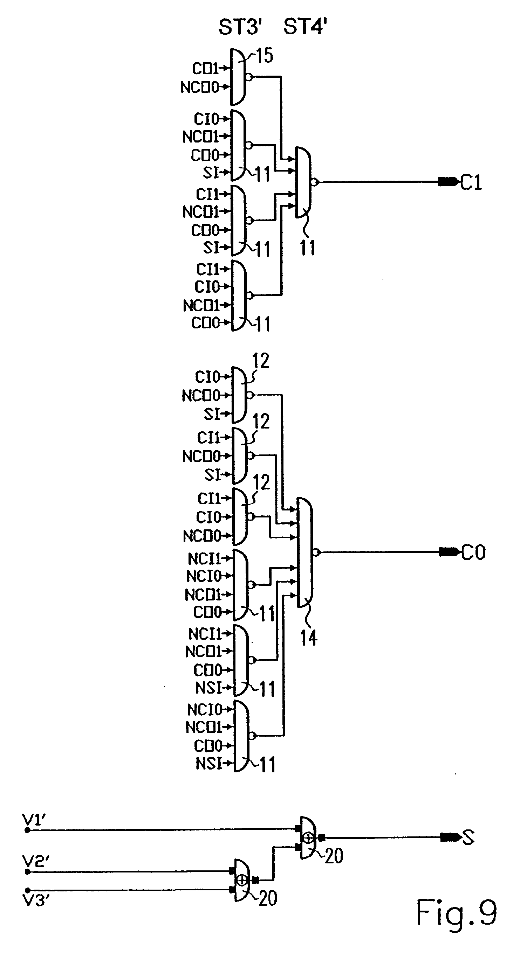

Die Fig. 8 und 9 verdeutlichen in Zusammenschau die Gatterstruktur eines Ausführungsbeispiels eines erfindungsgemäßen 3und2-zu-3 CR Addierers. Mit NCI0 und NCI1 werden wiederum die invertierten Übertrags-Eingänge CI0 und CI1 bezeichnet, invertierte Eingänge zu den Eingängen I0 bis I2 werden bei dem hier dargestellten Ausführungsbeispiel nicht benötigt, siehe die symbolische Darstellung der verwendeten Bezugszeichen im linken Teil der Fig. 8.

Die Verschaltung der Gatter sowie Verbindungsstellen V1' V2' und V3' zwischen den in den Fig. 8 und 9 gezeigten Schaltungsabschnitten sind wiederum den in der Zeichnung verwendeten Bezugszeichen zu entnehmen.

Die an den Übertrags-Ausgängen C0 und C1 ausgegebenen Übertrags-Bits hängen von der Belegung der Eingänge I0 bis I2 und der Übertrags-Eingänge CI0, CI1 ab. Zur Steuerung der Übertrags-Ausgänge C0, C1 wird ein 4-stufiger Gatteraufbau (Inverter werden wie gesagt nicht als Gatter mitgezählt) eingesetzt. Eine erste Stufe ST1' besteht bezüglich der Übertrags-Ausgänge C0, C1 aus drei NAND-Gattern 15 mit jeweils zwei Eingängen. Wie den Bezugszeichen zu entnehmen ist, werden die drei NAND-Gatter 15 an allen Eingängen nicht-invertiert angesteuert.

Die Ausgänge der drei NAND-Gatter 15 der ersten Stufe ST1' werden zusammengefasst und einem NAND-Gattern 12 mit drei Eingängen zugeleitet. Dieses NAND-Gatter 12 bildet die zweite Stufe ST2' des 3und2-zu-3 CR Addierers bezüglich der Übertrags-Ausgänge C0, C1.

Die dritte Stufe ST3' ist bezüglich des ersten Übertrags-Ausgangs C0 aus drei NAND-Gattern 12 mit jeweils drei Eingängen und drei NAND-Gattern 11 mit jeweils vier Eingängen aufgebaut. Bezüglich dem zweiten Übertrags-Ausgang C1 weist die dritte Stufe ST3' drei NAND-Gatter 11 mit jeweils vier Eingängen und ein NAND-Gatter 15 mit zwei Eingängen auf.

Die vierte Stufe ST4' weist hinsichtlich des niederwertigen Übertrags-Ausgangs C0 ein NAND-Gatter 14 mit sechs Eingängen und hinsichtlich des höherwertigen Übertrags-Ausgangs C1 ein NAND-Gatter 11 mit vier Eingängen auf.

Der Gatteraufbau zur Ansteuerung des Summen-Ausgangs S ist ebenfalls 4-stufig. Die erste Stufe besteht aus einem XOR-Gatter 20, welches zwei Eingänge, z.B. I0, I1, entgegennimmt. Die zweite bis vierte Stufe besteht jeweils aus einem einzelnen XOR-Gatter 20, wobei das XOR-Gatter 20 der zweiten Stufe den verbleibenden Eingang I2 empfängt.

Auch hier werden die beiden Übertrags-Eingänge CI0 und CI1 erst der dritten Stufe ST3' des erläuterten Gatteraufbaus zugeleitet. Dies gilt sowohl für die Übertrags-Ausgänge C0, C1 als auch für den Summen-Ausgang S. Deswegen gehen auch hier die Bits für die Übertragseingänge CI0, CI1 mit einer geringeren Zeitverzögerung als die Eingangs-Bits I0 bis I2 in die Rechnung ein, d.h. müssen erst zu einem um zwei Gatterlaufzeiten (drei Gatterlaufzeiten bei Mitberechnung der Gatterlaufzeit der Inverter) späteren Zeitpunkt als letztere eingangsseitig vorliegen.

Nach dem Empfang der Bits an den Übertragseingängen CI0, CI1 werden lediglich zwei Gatterlaufzeiten benötigt, um an den Übertrags-Ausgängen C0, C1 die Übertrags-Bits bereitzustellen.

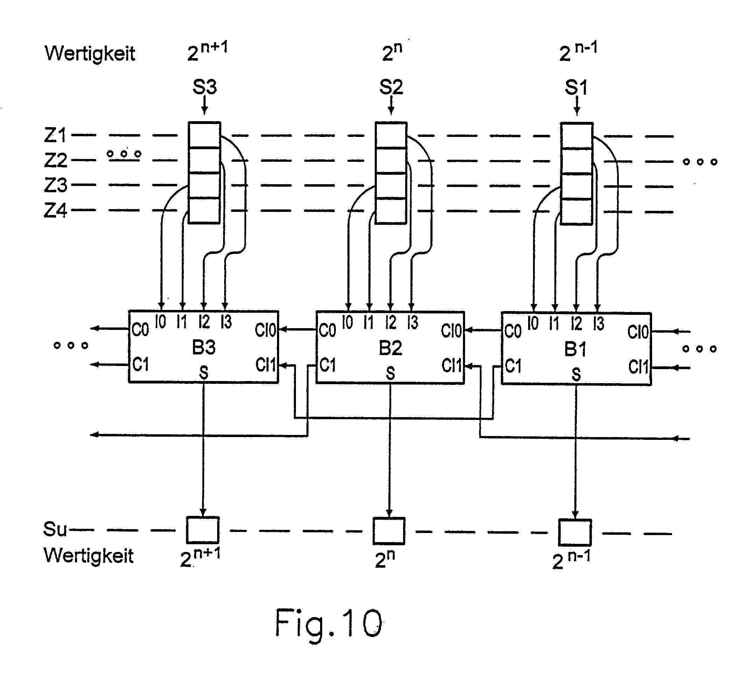

Fig. 10 zeigt einen Schaltbildabschnitt eines übertragsbeschleunigten Addierers, welcher eine maximale Anzahl von vier binärkodierten Zahlen Z1, Z2, Z3 und Z4 summieren kann. In der Spalte S1 sind die Bits der n-1-ten Stelle, in der Spalte S2 die Bits der n-ten Stelle und in der Spalte S3 die Bits der n+1-ten Stelle jeweils der Binärzahlen Z1 bis Z4 eingetragen. Dabei ist n eine beliebige ganze Zahl größer oder gleich Eins. Die Bits in Spalte S1 weisen somit die Wertigkeit 2ⁿ⁻¹ auf, die Bits in Spalte S2 weisen die Wertigkeit 2ⁿ auf und die Bits in Spalte S3 besitzen die Wertigkeit 2ⁿ⁺¹.

Der Addierer wird (ausschnittsweise) durch die drei 4und2-zu-3 CR Addierer B1, B2 und B3 dargestellt. Die Eingänge I0 bis I3 des 4und2-zu-3 Addierers B1 nehmen die Bits der Spalte S1 entgegen. In analoger Weise werden die Eingänge I0 bis I3 der 4und2-zu-3 CR Addierer B2 und B3 von den Bits in den Spalten S2 und S3 versorgt.

Die Summen-Bit-Ausgänge S der 4und2-zu-3 CR Addierer B1, B2, B3 sind die n-1-te, n-te und n+1-t Stelle der Binärsumme Su der Zahlen Z1 bis Z4.

Um eine korrekte Behandlung des Übertrags zwischen den 4und2-zu-3 CR Addierern B1, B2 und B3 zu gewährleisten, sind die Addierer folgendermaßen verschaltet: Der Übertrags-Ausgang C0 niedrigerer Wertigkeit des 4und2-zu-3 CR Addierers B1 ist mit einem Übertrags-Eingang (in Fig. 10 dem Übertrags-Eingang CI0) des 4und2-zu-3 CR Addierers B2 verbunden. Der Übertrags-Ausgang C1 höherer Wertigkeit des 4und2-zu-3 CR Addierers B1 ist mit einem Übertrags-Eingang (in Fig. 10 dem Übertrags-Eingang CI1) des 4und2-zu-3 CR Addierers B3 verbunden. In entsprechender Weise ist der Übertrags-Ausgang C0 niedrigerer Wertigkeit des 4und2-zu-3 CR Addierers B2 mit dem Übertrags-Eingang CI0 des 4und2-zu-3 CR Addierers B3 verbunden, und der Übertrags-Ausgang C1 höherer Wertigkeit des 4und2-zu-3 CR Addierers B2 ist einem nicht dargestellten nächsten 4und2-zu-3 CR Addierer zugeleitet, welcher zur Summation von Bits der Wertigkeit 2ⁿ⁺² vorgesehen ist. Entsprechend diesem Schema ist der Übertrags-Eingang CI1 des 4und2-zu-3 CR Addierers B2 mit dem Übertrags-Ausgang C1 höherer Wertigkeit eines vorangehenden, nicht dargestellten 4und2-zu-3 CR Addierers verbunden, welcher Bits der Wertigkeit 2ⁿ⁻² aufsummiert.

Fig. 10 macht klar, dass ein übertragsbeschleunigter Addierer für maximal 4 Dualzahlen aus einer einzigen Zeile von 4und2-zu-3 CR Addierern aufgebaut sein kann. Analog kann ein übertragsbeschleunigter Addierer für maximal 3 Dualzahlen aus einer einzigen Zeile von 3und2-zu-3 CR Addierern aufgebaut sein.

Der in Fig. 10 gezeigte Addierer für vier Dualzahlen kann als Endstufe eines Addierers eingesetzt werden, welcher mehr als 4 Dualzahlen (d.h. mit anderen Worten eine Mehrzahl von Bit-Sätzen unterschiedlicher Wertigkeit, die jeweils mehr als 4 Bits enthalten) addiert. In diesem Fall muss mittels geeigneter parallel angeordneter, untereinander verschalteter Addiererbäume wie in Fig. 1 gezeigt zunächst eine Kompression jedes Bit-Satzes auf 4 Bits vorgenommen werden. Diese 4 Bit pro Bit-Satz werden nachfolgend in dem in Fig. 10 gezeigten "einzeiligen" Addierer zusammengezählt.

Auf diese Weise werden im Vergleich zum herkömmlichen WT-Addierer CS-Addiererstufen eingespart. Der Stufenbilanzdarstellung in Fig. 2 ist zu entnehmen, dass bei Verwendung einer Endstufe bestehend aus 4und2-zu-3 CR Addierern (Fig. 10) die Stufen 8 und 9 und bei Verwendung einer Endstufe bestehend aus 3und2-zu-3 CR Addierern die Stufe 9 eingespart werden können.

## Patentansprüche

1. 4und2-zu-3 Bit Carry-Ripple Addierer, mit
- 4 ersten Eingängen (I0, I1, I2, I3) zur Entgegennahme von 4 zu summierenden Eingabe-Bits derselben Wertigkeit w,
- 2 zweiten Eingängen (CI0, CI1) zur Entgegennahme von zwei Übertrags-Bits der Wertigkeit w,
- einem Ausgang (S) für ein Summen-Bit der Wertigkeit w, und
- zwei Ausgängen (C0, C1) für zwei Übertrags-Bits der Wertigkeiten 2w und 4w.

2. 3und2-zu-3 Bit Carry-Ripple Addierer, mit
- 3 ersten Eingängen (I0, I1, I2) zur Entgegennahme von 3 zu summierenden Eingabe-Bits derselben Wertigkeit w,
- 2 zweiten Eingängen (CI0, CI1) zur Entgegennahme von zwei Übertrags-Bits der Wertigkeit w,
- einem Ausgang (S) für ein Summen-Bit der Wertigkeit w, und
- zwei Ausgängen (C0, C1) für zwei Übertrags-Bits der Wertigkeiten 2w und 4w.

3. Carry-Ripple Addierer nach einem der vorhergehenden Ansprüche,
**dadurch gekennzeichnet,**
- **dass** eine maximale Anzahl von 4 Gattern zwischen einem beliebigen ersten Eingang (I0, I1, I2; I3) und einem beliebigen der Ausgänge (C0, C1) für die Übertrags-Bits vorhanden ist.

4. Carry-Ripple Addierer nach einem der vorhergehenden Ansprüche,
**dadurch gekennzeichnet,**
- **dass** eine maximale Anzahl von 2 Gattern zwischen einem beliebigen zweiten Eingang (CI0, CI1) und einem beliebigen der Ausgänge (C0, C1) für die Übertrags-Bits vorhanden ist.

5. Carry-Ripple Addierer nach einem der vorhergehenden Ansprüche,
**dadurch gekennzeichnet,**
- **dass** eine maximale Anzahl von 2 Gattern zwischen einem beliebigen zweiten Eingang (CI0, CI1) und dem Ausgang (S) für das Summen-Bit vorhanden ist.

6. Übertragsbeschleunigter Addierer zum Summieren einer Mehrzahl von Bit-Sätzen, wobei die in einem Bit-Satz (S1, S2, S3) enthaltenen Bits dieselbe Wertigkeit und Bits unterschiedlicher Bit-Sätze (S1, S2, S3) unterschiedliche Wertigkeiten aufweisen, und wobei jedem Bit-Satz (S1, S2, S3) ein Bit-Satz-Addierer zugeordnet ist, welcher unter Berücksichtigung von bei der Summation von Bit-Sätzen niedrigerer Wertigkeit gewonnenen Überträgen ein Bit der Wertigkeit des jeweiligen Bit-Satzes berechnet,
**dadurch gekennzeichnet,**
- **dass** zumindest einer der Bit-Satz-Addierer einen ausgangsseitig angeordneten Carry-Ripple Addierer gemäß einem der vorhergehenden Ansprüche umfaßt.

7. Übertragsbeschleunigter Addierer nach Anspruch 6,
**dadurch gekennzeichnet,**
- **dass** sämtliche Bit-Sätze maximal 4 Bits enthalten, und
- **dass** sämtliche Bit-Satz-Addierer jeweils einstufig in Form eines 4und2-zu-3 Bit Carry-Ripple Addierers (B1, B2, B3) gemäß Anspruch 1 realisiert sind.

8. Übertragsbeschleunigter Addierer nach Anspruch 6,
**dadurch gekennzeichnet,**
- **dass** sämtliche Bit-Sätze maximal 3 Bits enthalten, und
- **dass** sämtliche Bit-Satz-Addierer jeweils einstufig in Form eines 3und2-zu-3 Bit Carry-Ripple Addierers (B1, B2, B3) gemäß Anspruch 2 realisiert sind.
